# FASCICULE DE BREVET EUROPEEN

(11) **EP 4 505 087 B1**
(45) Date de publication et mention de la délivrance du brevet: **06.05.2026**
(21) Numéro de dépôt: 23712535.6
(22) Date de dépôt: 21.03.2023
(51) Int. Cl.: F16C 1/10, F16C 1/14, E05B 79/16, E05B 79/20

(54) **AGRAFE DE FIXATION D'UNE EXTRÉMITÉ D'UN ORGANE DE TRANSMISSION MÉCANIQUE ÉQUIPANT UN VÉHICULE AUTOMOBILE**
BEFESTIGUNGSELEMENT ZUR BEFESTIGUNG EINES ENDES EINES MECHANISCHEN ÜBERTRAGUNGSELEMENTS EINES KRAFTFAHRZEUGS
FASTENER FOR ATTACHING ONE END OF A MECHANICAL TRANSMISSION MEMBER OF A MOTOR VEHICLE

(30) Priorité: 01.04.2022 FR 2202980
(43) Date de publication de la demande: 12.02.2025
(73) Titulaire: Renault s.a.s, 92100 Boulogne Billancourt (FR)
(72) Inventeur: MARME, Philippe, 78280 GUYANCOURT (FR); PELAMOURGUES, Karine, 78280 GUYANCOURT (FR)
(86) Numéro de dépôt international: PCT/EP2023/057198
(87) Numéro de publication internationale: WO 2023/186626

(56) Documents cités:
- FR-A- 1 391 718
- US-A- 3 695 652

## Description

### Domaine technique de l'invention

La présente invention relève du domaine des dispositifs de commande équipant un véhicule automobile et comprenant un organe de transmission mécanique d'un mouvement, notamment une tringle ou un câble associé à une gaine, qui est interposé entre un organe de manœuvre et un organe à manœuvrer. Elle a pour objet une agrafe configurée pour la fixation d'au moins une des extrémités de l'organe de transmission mécanique sur l'organe de manœuvre ou l'organe à manœuvrer.

### Etat de la technique

Parmi les dispositifs de commande équipant un véhicule automobile, il est courant d'utiliser un organe de transmission mécanique d'un mouvement pour déplacer un organe à manœuvrer à partir d'un organe de manœuvre. Un tel organe de transmission mécanique est formé d'une tringle qui est une tige rigide ou bien d'une gaine et d'un câble souples.

Un tel dispositif de commande est couramment utilisé dans le domaine automobile pour manœuvrer le pêne d'une serrure équipant un ouvrant de véhicule automobile, à partir de l'actionnement par un passager d'une poignée montée sur l'ouvrant. Un actionnement de la poignée agit sur l'organe de transmission mécanique qui transmet son déplacement à l'organe à manœuvrer, couramment agencé en levier. L'organe à manœuvrer actionne ensuite à son tour un organe mobile formé du pêne équipant la serrure.

Il est couramment utilisé une agrafe sur laquelle est maintenue l'une des extrémités de l'organe de transmission mécanique. En cela, l'agrafe constitue un organe de liaison mécanique entre d'une part l'organe de manœuvre et l'organe de transmission mécanique et d'autre part l'organe de transmission mécanique et l'organe à manœuvrer. Les documents FR 1 391 718 A et US 3 695 652 A décrivent une telle agrafe, les caractéristiques du préambule de la revendication 1 étant montrées dans le document FR 1 391 718 A.

Il se pose alors le problème général des modalités de montage des extrémités de l'organe de transmission mécanique sur l'agrafe elle-même prévue pour être montée sur l'organe de manœuvre ou sur l'organe à manœuvrer. En effet, l'accès à l'organe de manœuvre ou à l'organe à manœuvrer peut être rendu difficile pour un monteur dans un environnement encombré, ce qui est couramment le cas pour un équipement de véhicule automobile, tel que notamment un ouvrant.

Une telle difficulté d'accès, visuel et/ou physique, rend délicate l'installation par le monteur de l'extrémité de l'organe de transmission mécanique sur l'agrafe. Une telle difficulté est accrue en raison de la position imposée sur le véhicule de l'organe de manœuvre ou de l'organe à manœuvrer, notamment disposé à l'intérieur de la porte, et à proximité immédiate de deux panneaux de tôle l'emprisonnant.

En outre, les extrémités de l'organe de transmission mécanique sont fréquemment coudées ce qui complexifie son installation sur le véhicule automobile, les branches concourantes de l'extrémité de l'organe de transmission mécanique imposant un pivotement de l'extrémité par rapport à l'agrafe de l'art antérieur, ou un pivotement de l'agrafe en tant que telle. Or, la place n'est pas toujours disponible pour mettre en œuvre ce pivotement.

Le but de l'invention est de surmonter de telles difficultés. Un des buts de l'invention est de proposer une agrafe de fixation d'une des extrémités coudées d'un organe de transmission mécanique de mouvements que comporte un équipement d'un véhicule automobile.

Il est notamment visé par l'invention de proposer une telle agrafe dont un agencement permet de simplifier pour le monteur non seulement la fixation sur l'agrafe de l'une des extrémités de l'organe de transmission mécanique mais aussi la fixation de l'agrafe elle-même sur l'organe de manœuvre ou sur l'organe à manœuvrer.

Il est aussi notamment recherché de proposer une telle agrafe dont l'agencement est compatible pour recevoir l'une des extrémités de l'organe de transmission mécanique, qu'il soit indifféremment du type à tringle ou du type à câble et gaine. Autrement dit, il est recherché une telle agrafe qui soit compatible pour le maintien sur l'organe de manœuvre ou sur l'organe à manœuvrer d'une extrémité d'un câble, donc souple, ou d'une tringle ou tige, donc rigide.

Il est aussi visé par l'invention de proposer une solution à moindres coûts dans le contexte d'une concurrence économique notoirement sévère dans le domaine automobile, pouvant rendre rédhibitoire une solution trop onéreuse.

### Présentation de l'invention

La présente invention propose avantageusement une agrafe selon la revendication 1 configurée pour la fixation d'un embout équipant l'une quelconque au moins des extrémités d'un organe de transmission mécanique reliant un organe de manœuvre et un organe à manœuvrer constitutifs d'un équipement d'un véhicule automobile. L'agrafe est agencée pour maintenir l'embout qui comporte un coude interposé entre une première branche de l'embout et une deuxième branche de l'embout qui s'étendent suivant des directions concourantes.

Selon la présente invention, l'agrafe comporte une bague qui est ménagée autour d'un axe de révolution et qui est pourvue d'une pluralité de dents délimitant une pluralité de gorges constitutives d'un moyen de verrouillage agencé pour immobiliser la première branche de l'embout, et en ce que l'agrafe comporte un fût qui est ménagé autour de l'axe de révolution et qui délimite un évidement intérieur configuré pour loger la deuxième branche de l'embout, la bague comportant trois gorges angulairement équiréparties autour de l'axe de révolution.

L'agrafe comprend avantageusement l'une quelconque au moins des caractéristiques techniques suivantes prises seules ou en combinaison :
- chaque dent comporte au moins une rampe de guidage configurée pour guider la première portion de l'embout vers le moyen de verrouillage,
- chaque dent présente un profil effilé et s'étend entre un sommet de la dent et une base de la dent, le sommet et la base de la dent étant reliés par deux rampes de guidage,
- la gorge est agencé en un secteur circulaire majeur délimité par un pourtour périphérique circulaire, le pourtour périphérique circulaire comportant deux extrémités formant deux points de verrouillage ménagés en vis-à-vis l'un de l'autre et séparés d'une distance inférieure à un diamètre du secteur circulaire majeur,
- la gorge débouche vers un passage qui est délimité par une première rampe de guidage constitutive d'une première dent et une deuxième rampe de guidage constitutive d'une deuxième dent adjacente à la première dent,
- le fût est agencé en un pion de fixation élastiquement déformable qui est configuré pour fixer l'agrafe par emboîtement élastique sur l'organe de manœuvre ou l'organe à manœuvrer,
- le fût comporte au moins deux échancrures qui sont ménagées en vis-à-vis l'une de l'autre et qui s'ouvrent à une première extrémité du fût,
- la bague comporte un premier épaulement qui jouxte la première extrémité du fût et le fût comporte un deuxième épaulement ménagé en vis-à-vis du premier épaulement, le premier épaulement et le deuxième épaulement étant configurés en organe d'appui antagoniste le long de l'axe de révolution de l'agrafe contre des faces d'une paroi de l'organe de manœuvre ou de l'organe à manœuvrer,
- le fût et la bague forment un ensemble monobloc. On comprend que le caractère monobloc de l'agrafe est tel que le fût et la bague ne sont dissociables qu'à partir d'une altération, voire une destruction, de l'agrafe, du fût et/ou de la bague,
- l'agrafe est obtenue par moulage d'un matériau synthétique,

La présente invention a aussi pour objet un dispositif de commande d'un ouvrant d'un véhicule comprenant au moins l'organe à manœuvrer, l'organe de manœuvre et au moins l'organe de transmission mécanique reliant l'organe de manœuvre et l'organe à manœuvrer, l'organe de transmission mécanique étant fixé à l'organe à manœuvrer et/ou à l'organe de manœuvre par une telle agrafe,

Le dispositif de commande présente avantageusement l'une quelconque au moins des caractéristiques techniques suivantes prises seules ou en combinaison :
- l'organe de transmission mécanique comporte au moins une tringle interposée entre l'organe de manœuvre et l'organe à manœuvrer,
- l'organe de transmission mécanique comporte au moins un câble et une gaine interposés entre l'organe de manœuvre et l'organe à manœuvrer,
- au moins une extrémité de l'organe de transmission mécanique comprend l'embout qui comporte le coude interposé entre la première branche de l'embout et la deuxième branche de l'embout qui s'étendent suivant des directions concourantes, la première branche étant logée à l'intérieur du moyen de verrouillage tandis que la deuxième branche est logée à l'intérieur de l'évidement interne.

La présente invention a aussi pour objet un ouvrant de véhicule automobile équipé d'un tel dispositif de commande, l'organe de manœuvre étant formé d'une poignée de manœuvre à l'ouverture de l'ouvrant et l'organe à manœuvrer étant formé d'une serrure de maintien de l'ouvrant en position de fermeture.

La présente invention a aussi pour objet un siège de véhicule automobile comprenant un dossier et une assise, le siège est équipé d'un tel dispositif de commande, l'organe de manœuvre étant formé d'un bouton-poussoir pour actionner un basculement du dossier et l'organe à manœuvrer étant formé d'un loquet de déverrouillage d'un maintien sensiblement orthogonal du dossier par rapport à l'assise.

Autrement dit, la présente invention concerne une agrafe configurée pour la fixation d'un embout équipant l'une quelconque des extrémités d'un organe de transmission mécanique d'un mouvement reliant un organe de manœuvre et un organe à manœuvrer constitutifs d'un équipement d'un véhicule automobile.

L'organe de transmission mécanique est typiquement agencé en organe filiforme de transmission mécanique de mouvements entre l'organe de manœuvre et l'organe à manœuvrer. L'organe filiforme est indifféremment à tringle ou tige, ou à câble et gaine.

L'embout ménagé au bout de l'organe de transmission comporte un coude interposé entre une première branche de l'embout et une deuxième branche de l'embout qui s'étendent suivant des directions concourantes.

Sans être exclusive, une application visée de la présente invention concerne le montage de l'organe de transmission mécanique sur un ouvrant de véhicule automobile, pour manœuvrer à l'ouverture une serrure de maintien d'un ouvrant de véhicule automobile en position de fermeture, à partir de la manœuvre par un utilisateur d'une poignée équipant l'ouvrant, indifféremment une poignée intérieure ou une poignée extérieure du véhicule.

Selon la présente invention, l'agrafe est d'extension axiale et comporte au moins une bague surplombant un fût qui sont solidaires l'un en prolongement de l'autre en étant coaxiaux suivant un axe d'extension et/ou de révolution de l'agrafe, si après désigné axe de révolution. Le fût est configuré en organe de réception de la deuxième branche de l'embout suivant sa direction d'extension. La bague est configurée en organe de réception et de blocage de la première branche de l'embout. Cette réception et ce blocage sont réalisés suivant l'axe de révolution de l'agrafe.

L'agencement de l'agrafe permet à un monteur d'introduire à l'intérieur du fût, suivant l'axe de révolution de l'agrafe, la deuxième branche de l'embout orientée suivant sa direction d'extension. L'introduction axiale de la deuxième branche de l'embout à l'intérieur du fût par le monteur provoque le blocage sur la bague, par rapport à l'axe de révolution de l'agrafe, de la première branche de l'embout.

L'agrafe est ergonomique en étant d'un encombrement limité autour de son axe d'extension et/ou de révolution. Le geste effectué par le monteur pour non seulement installer mais aussi pour bloquer l'embout sur l'agrafe est monodirectionnel suivant l'axe de révolution de l'agrafe, ce qui est plus aisé dans un environnement encombré, qu'un mouvement en translation associé à un mouvement en rotation de l'embout ou de l'agrafe. L'installation et le blocage de l'embout sur l'organe à manœuvrer ou sur l'organe de manœuvre est obtenu à partir de l'unique geste monodirectionnel susmentionné.

L'ergonomie de l'agrafe facilite ainsi la tâche du monteur, ce qui est particulièrement utile dans le cas fréquent où l'accès visuel et/ou physique à l'agrafe est problématique sur un véhicule automobile dans un environnement encombré. Le blocage de l'embout sur l'agrafe suivant le geste monodirectionnel dispense le monteur d'avoir à effectuer un geste spécifique supplémentaire pour le montage de l'embout sur l'organe de manœuvre ou sur l'organe à manœuvrer, tel que via un dispositif à quart-de-tour.

En outre, l'agencement axial de l'agrafe en une bague interposée entre une couronne pourvue de rampes de guidage et un fût, la couronne, la bague et le fût étant tous coaxiaux, facilite l'obtention à moindres coûts de l'agrafe qui peut notamment être réalisée aisément par moulage, notamment en une matière synthétique.

Par ailleurs, la première branche de l'embout est bloquée en position à l'intérieur de l'agrafe, d'une part en basculement et d'autre part à l'encontre de son pivotement et/ou de son échappée inopinée hors de la bague suivant l'axe d'extension de l'agrafe.

L'embout est maintenu sur l'agrafe selon ses six degrés de liberté. La deuxième branche de l'embout logée à l'intérieur du fût est bloquée selon les trois degrés de liberté en rotation et deux degrés de liberté en translation, tandis que la première branche de l'embout est maintenu immobile par le moyen de verrouillage équipant la bague selon le troisième degré de liberté en translation.

Aussi, selon une forme avantageuse de réalisation de l'invention, la bague comporte une couronne munie d'une pluralité de dents. La couronne ménage entre deux dents adjacentes des rampes de guidage vers le moyen de verrouillage de la première branche de l'embout.

La réception et le blocage de l'embout sur l'agrafe sont réalisés par introduction suivant l'axe de révolution de la deuxième branche de l'embout à l'intérieur de la couronne, puis du fût, la première branche de l'embout venant concomitamment glisser le long d'une des rampes de guidage pour atteindre le moyen de verrouillage. La première branche de l'embout est ainsi guidée par les dents de la couronne vers le moyen de verrouillage, qui bloque sur la bague la première branche de l'embout en interdisant son retrait hors de l'agrafe.

Les dents sont notamment disposées en périphérie de la couronne, à une extrémité axiale supérieure de la bague qui est opposée à une extrémité axiale inférieure qui est solidaire du fût. Les notions inférieure et supérieure sont des notions reconnaissables selon un sens d'introduction de l'embout à l'intérieur de l'agrafe suivant son axe d'extension, l'embout étant introduit à l'intérieur de l'agrafe à travers l'extrémité axiale supérieure de la bague, et donc de l'agrafe.

Plus précisément selon une forme de réalisation, les dents sont disposées en périphérie de la couronne en étant orientées chacune sensiblement parallèlement à l'axe d'extension de l'agrafe.

Selon l'invention, les dents étant au nombre de trois, les dents sont angulairement réparties autour de l'axe d'extension de l'agrafe à équidistance les unes des autres en périphérie de la couronne.

Selon une forme de réalisation, les dents sont chacune munies de deux rampes de guidage. La première branche de l'embout glisse ainsi entre deux dents adjacentes le long d'au moins une des rampes de guidage pour rejoindre le moyen de verrouillage.

Chacune des dents comporte un couple de rampes de guidage, formée chacune par un côté de la dent. Ces rampes de guidage sont inclinées par rapport à l'axe de révolution de l'agrafe. Chaque dent s'étend entre un sommet et une base, le sommet étant préférentiellement pointu, ce qui évite au monteur de faire circuler l'embout dans un plan orthogonal à l'extension de la bague, un tel tâtonnement étant évité par l'agencement en pointe de la dent et ses rampes de guidage concourantes.

Selon une forme de réalisation, le moyen de verrouillage comprend une gorge d'emboîtement de la première branche de l'embout suivant une direction d'emboîtement qui est parallèle à l'axe de révolution de l'agrafe. La gorge est ménagée entre deux dents adjacentes, notamment en prolongement des rampes de guidage.

Selon une forme de réalisation, le moyen de verrouillage comprend des reliefs de retenue que comportent les dents. Les reliefs de retenue sont ménagés à la jonction entre les rampes de guidage et la gorge. Les reliefs de retenue en vis-à-vis de deux dents adjacentes ménagent entre eux un passage d'introduction en force de la première branche de l'embout à l'intérieur de la gorge. Ces reliefs de retenue forment conjointement un point dur à l'insertion de la première branche à l'intérieur de la gorge et préviennent d'une échappée inopinée de la première branche hors de la gorge.

La notion d'introduction en force est en corrélation d'une part avec une flexibilité des dents et une résistance mécanique de l'embout, et d'autre part un agencement des reliefs de retenue provoquant une déformation des dents lors de l'introduction de la première branche de l'embout à l'intérieur de la gorge. En outre, la flexibilité des dents est définie en cohérence avec des valeurs normées d'effort ergonomique de montage.

Les reliefs de retenue ou points de verrouillage de la première branche de l'embout à l'intérieur de la gorge sont avantageusement agencés en un bossage ménagé à la jonction de chaque rampe de guidage et de la gorge jouxtant cette rampe de guidage.

L'agencement des reliefs de retenue en bossage permet d'éviter de blesser la première branche de l'embout lors de son introduction en force à l'intérieur de la gorge, l'embout formant un organe de protection de l'organe de transmission mécanique. Un tel agencement des reliefs de retenue en bossage permet aussi de provoquer uniquement une déformation modérée des dents adjacentes entre lesquelles la gorge est ménagée.

Selon l'invention, les dents sont au nombre de trois et les gorges sont au nombre de trois, une gorge étant interposée entre deux dents et une dent étant interposée entre deux gorges. Ceci facilite la tâche du monteur lors de l'installation de l'embout sur l'agrafe et accroît en conséquence une ergonomie de l'agrafe, sans faire obstacle à une obtention à moindres coûts de l'agrafe par moulage de matière synthétique.

La bague comporte une paroi de fond qui est munie d'une ouverture qui débouche sur l'évidement intérieur du fût. Il est compris ici que la paroi de fond s'étend perpendiculairement à l'axe d'extension et/ou de révolution de l'agrafe, l'ouverture et l'évidement intérieur du fût étant coaxiaux suivant l'axe d'extension et/ou de révolution de l'agrafe. L'ouverture est au moins dimensionnée pour autoriser le passage de la deuxième extrémité de l'embout à son travers par coulissement.

La paroi de fond que comporte la bague constitue avantageusement un organe de jonction entre la bague et le fût, qui forment conjointement un corps monobloc constituant l'agrafe. La structure de l'agrafe en est simplifiée et peut encore être réalisée à moindres coûts par moulage.

Selon une forme de réalisation, l'agrafe est configurée en pion d'emboîtement élastique sur l'un quelconque de l'organe de manœuvre ou de l'organe à manœuvrer.

L'agencement de l'agrafe en pion d'emboîtement élastique facilite son installation sur l'un quelconque de l'organe de manœuvre ou de l'organe à manœuvrer, en étant d'un encombrement limité. L'agrafe peut être montée en atelier sur l'organe de manœuvre ou sur l'organe à manœuvrer. A titre d'exemple, la fabrication de l'organe de manœuvre ou de l'organe à manœuvrer peut inclure une étape de montage de l'agrafe. Ceci simplifie encore la tâche du monteur qui est exemptée du montage de l'agrafe sur l'organe de manœuvre ou sur l'organe à manœuvrer préalablement à l'installation de l'embout sur l'agrafe.

En outre, l'emboîtement élastique de l'agrafe sur l'organe de manœuvre ou sur l'organe à manœuvrer permet au monteur de faire pivoter l'agrafe autour de son axe d'extension sans affecter le maintien axial de l'agrafe sur l'organe de manœuvre ou sur l'organe à manœuvrer, via deux prises d'appuis antagonistes de l'agrafe suivant son extension axiale tel que décrit ci-dessous.

Ceci permet au monteur sur le site de montage de l'embout sur l'agrafe, d'adapter en cas de besoin la position des dents autour de l'axe d'extension de l'agrafe et par suite d'orienter la première branche de l'embout sur la bague.

Plus particulièrement selon une forme de réalisation, le fût est solidaire de la paroi de fond de la bague qui ménage un premier épaulement de l'agrafe. L'extrémité de l'agrafe qui est axialement opposée à la bague comporte un deuxième épaulement de l'agrafe. La paroi périphérique du fût comporte au moins deux échancrures s'ouvrant à l'extrémité de l'agrafe qui est axialement opposée à la bague. Pour favoriser une déformation élastique du fût, un jeu radial de dimension adaptée est éventuellement ménagé entre la deuxième branche de l'agrafe et l'évidement intérieur du fût, selon la dimension d'extension axiale des échancrures.

Le fût est élastiquement déformable pour son introduction par emboîtement élastique à l'intérieur d'un logement que comporte l'organe de manœuvre ou l'organe à manœuvrer. Le premier épaulement et le deuxième épaulement ménagent contre l'organe de manœuvre ou l'organe à manœuvrer des appuis antagonistes suivant l'axe d'extension de l'agrafe.

Selon une approche plus générale, la présente invention concerne aussi un dispositif de commande à l'ouverture que comporte un équipement de véhicule automobile. Le dispositif de commande comporte un organe de manœuvre et un organe à manœuvrer pour provoquer le déplacement d'un organe mobile que comporte l'équipement du véhicule. L'organe de manœuvre et l'organe à manœuvrer sont reliés entre eux par un organe de transmission mécanique d'un mouvement.

Chaque extrémité de l'organe de transmission mécanique est respectivement fixée à l'un quelconque de l'organe de manœuvre ou de l'organe à manœuvrer par une agrafe telle qu'elle vient d'être décrite.

L'organe de transmission mécanique est par exemple formé d'au moins une tringle ou tige de commande qui est interposée entre l'organe de manœuvre et l'organe à manœuvrer. Selon une variante, l'organe de transmission mécanique est formé d'au moins un câble et d'une gaine interposés entre l'organe de manœuvre et l'organe à manœuvrer.

La présente invention peut être avantageusement appliquée à un ouvrant de véhicule automobile équipé d'un dispositif de commande à l'ouverture tel qu'il vient d'être décrit. Dans ce cas, l'organe de manœuvre est une poignée de commande à l'ouverture de l'ouvrant, poignée intérieure ou poignée extérieure du véhicule, et l'organe à manœuvrer est un organe d'actionnement à l'ouverture du pêne équipant une serrure de maintien de l'ouvrant en position de fermeture. Il est compris ici que le pêne de la serrure est constitutif de l'organe mobile à déplacer via l'organe à manœuvrer qui est entraîné en mobilité par l'organe de transmission mécanique via la poignée.

La présente invention peut aussi être appliquée à un siège de véhicule automobile comportant une assise et un dossier basculant équipé d'un dispositif de commande tel qu'il vient d'être décrit. L'organe de manœuvre est dans ce cas un organe de commande d'un basculement du dossier, tel qu'un bouton-poussoir, une manette de commande ou analogue, et l'organe à manœuvrer est un organe d'actionnement d'un loquet de libération du dossier initialement en une position droite. Il est compris ici que le loquet est alors constitutif de l'organe mobile qui est déplacé par l'organe à manœuvrer à partir de l'organe de manœuvre équipant l'organe de transmission mécanique.

D'une manière générale, la présente invention peut être appliquée à tout autre équipement d'un véhicule automobile dans lequel un organe mobile est déplacé par l'organe à manœuvrer que comporte un dispositif de commande.

La présente invention concerne aussi un véhicule automobile pourvu d'au moins un équipement muni d'au moins un dispositif de commande tel qu'il vient d'être décrit. L'équipement est pourvu d'un organe mobile qui est mis en mouvement par un organe à manœuvrer relié à un organe de manœuvre par un organe de transmission mécanique. L'une quelconque au moins des extrémités de transmission mécanique est fixée à l'organe de manœuvre ou à l'organe à manœuvrer par une agrafe conforme à l'invention et telle que décrite dans le présent document.

### Présentation des figures

L'invention sera mieux comprise à la lecture de la description détaillée qui suit d'un exemple de réalisation, en relation avec les figures suivantes :
[Fig. 1] La figure 1 est un schéma illustrant un équipement d'un véhicule automobile pourvu d'un dispositif de commande comprenant une agrafe de la présente invention.
[Fig. 2] La figure 2 est une vue de côté de l'agrafe représentée schématiquement sur la figure 1.
[Fig. 3] La figure 3 est une autre vue de côté de l'agrafe représentée schématiquement sur la figure 1.
[Fig. 4] La figure 4 est une vue de dessus de l'agrafe représentée sur les figures 2 à 4.
[Fig. 5] La figure 5 est une vue de dessus de l'agrafe représentée sur les figures 2 à 4, un embout équipant l'une des extrémités d'un organe de transmission mécanique schématisé sur la figure 1 étant installé à l'intérieur de l'agrafe.

### Description détaillée de l'invention

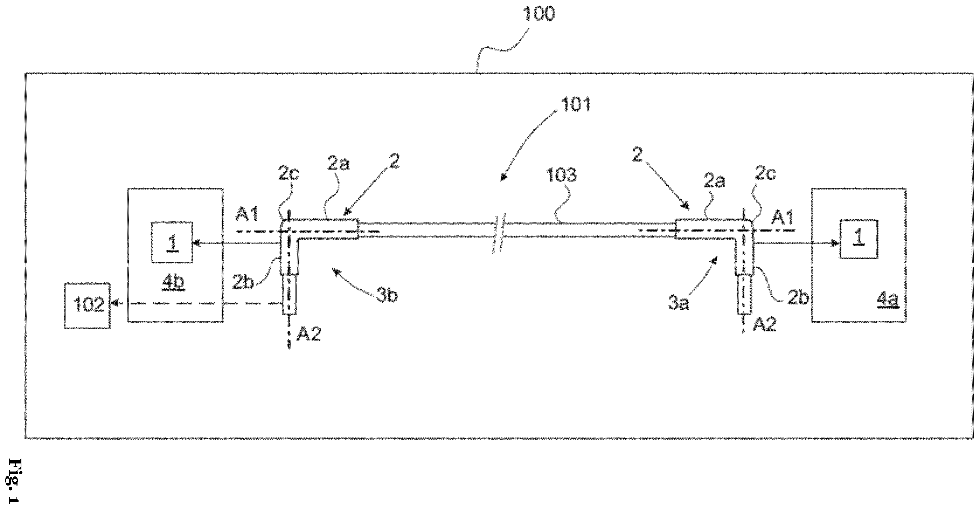

Sur la figure 1, un équipement 100 de véhicule automobile est pourvu d'un dispositif de commande 101 pour manœuvrer mécaniquement à distance un organe mobile 102. Le dispositif de commande 101 est du type à transmission mécanique d'un mouvement. Le dispositif de commande 101 comporte à cet effet un organe de transmission mécanique 103 de mouvements par tringle, par tige ou par câble et gaine pour mettre en mouvement l'organe mobile 102.

L'organe de transmission mécanique 103 est préférentiellement allongé entre ses extrémités 3a, 3b, mais un tel organe de transmission mécanique 103 peut fréquemment comporter au moins un angle entre ses extrémités 3a, 3b.

L'organe de transmission mécanique 103 comprend une première extrémité 3a qui est fixé à un organe de manœuvre 4a et une deuxième extrémité 3b qui est fixé à un organe à manœuvrer 4b par l'intermédiaire duquel l'organe mobile 102 est mis en mouvement.

Les extrémités 3a, 3b de l'organe de transmission 103 sont chacune munies d'un embout coudé 2 pour leur fixation sur une agrafe 1 qui leur est affectée.

Plus particulièrement, chacun des embouts 2 comporte un coude 2c ménageant deux branches 2a, 2b, qui s'étendent de part et d'autre du coude 2c suivant des directions concourantes A1, A2. Une première branche 2a de l'embout 2 s'étend suivant une première direction A1, une deuxième branche 2b de l'embout 2 s'étend suivant une deuxième direction A2 et les deux branches 2a, 2b sont jointent par le coude 2c.

Selon l'exemple illustré l'embout 2 est coudé à 90°, la première branche 2a de l'embout 2 et la deuxième branche 2b de l'embout 2 étant alors orientées perpendiculairement l'une par rapport à l'autre.

L'équipement 100 est notamment un ouvrant de véhicule automobile. Dans ce cas, l'organe de manœuvre 4a est alors formé d'une poignée et l'organe à manœuvrer 4b est formé d'une serrure.

Une manœuvre de la poignée par un utilisateur provoque un déplacement de l'organe de transmission 103. Ceci a pour effet de provoquer un basculement du levier qui manœuvre alors, directement ou indirectement, un organe mobile 102. Ce dernier est agencé en un levier d'entrainement d'un pêne équipant la serrure afin d'autoriser une ouverture de l'ouvrant par suite de la manœuvre de la poignée par l'utilisateur.

Dans ce cas d'exemple d'un ouvrant de véhicule automobile, la poignée constitutive de l'organe de manœuvre 4a est montée mobile sur un premier boîtier et le levier constitutif de l'organe à manœuvrer 4b est articulé en basculement sur un deuxième boîtier.

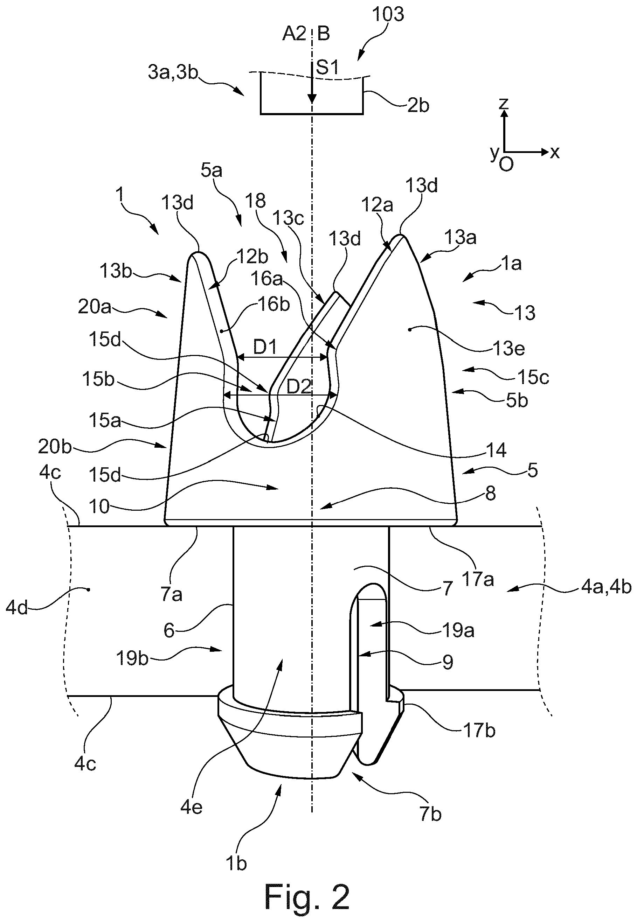

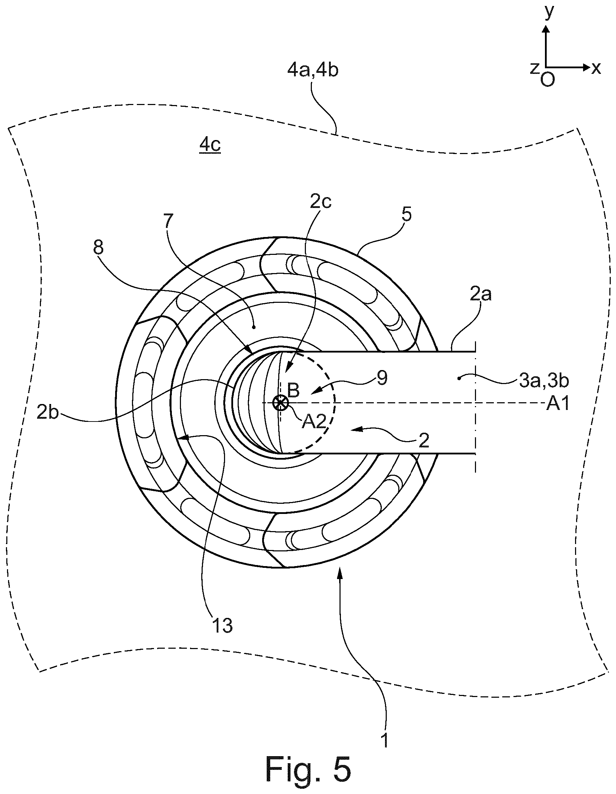

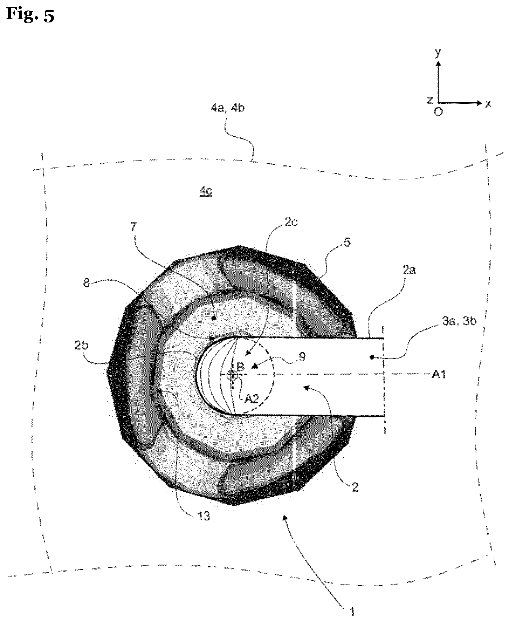

Sur les figures 2 à 5, les éléments représentés sont illustrés dans un repère orthonormé Oxyz qui comprend un axe vertical Oz et un plan horizontal Oxy orthogonal à l'axe vertical Oz. Ainsi, les qualificatifs « supérieur » et « inférieur » indiquent une position relative d'éléments suivant l'axe vertical Oz et les qualificatifs « latéral » ou "transversal" indiquent une position relative d'éléments dans le plan horizontal Oxy de part et d'autre de l'axe vertical Oz.

Sur la figure 2, est représentée une agrafe 1 selon l'invention qui est utilisée pour la fixation de l'une ou l'autre des extrémités 3a, 3b de l'organe de transmission mécanique 103 sur l'organe de manœuvre 4a ou l'organe à manœuvrer 4b.

L'agrafe 1 s'étend principalement suivant un axe de révolution B qui est parallèle à l'axe vertical Oz. L'agrafe 1 est formée d'un corps monobloc, réalisé par exemple par moulage par injection d'une matière synthétique, et comporte une extrémité supérieure 1a qui est agencée en une bague 5 et une extrémité inférieure 1b qui est agencée en un fût 6. Le long de l'axe de révolution B, la bague 5 surplombe le fût 6. La bague 5 et le fût 6 sont d'une conformation cylindrique et sont coaxiaux suivant l'axe de révolution B de l'agrafe 1. La bague 5 et le fût 6 sont solidaires l'un de l'autre par l'intermédiaire d'une paroi de fond 7 que comporte la bague 5.

La bague 5 délimite un volume interne 10 de réception de la deuxième branche 2b de l'embout 2 et la paroi de fond 7 de la bague 5 comporte une ouverture 8 qui forme un passage entre le volume interne 10 de la bague 5 et l'évidement intérieur 9 du fût 6. L'ouverture 8 est dimensionnée pour autoriser le passage en contact étroit à son travers de la deuxième branche 2b de l'embout 2.

A cet effet, la bague 5 est équipée d'une couronne 13 qui s'étend en périphérie et à l'extrémité supérieure 1a de la bague 5. La couronne 13 est munie d'une pluralité de dents 13a, 13b, 13c identiques, au nombre de trois sur l'exemple illustré. Les dents 13a, 13b, 13c délimitent entre elles un débouché supérieur 5a de la bague 5 à travers lequel la deuxième branche 2b de l'embout 2 est introduite à l'intérieur de l'agrafe 1. Les dents 13a, 13b, 13c sont préférentiellement identiques entre elles, chaque dent 13a, 13b, 13c s'étendant entre un sommet 13d et une base 13e jouxtant une limite supérieure 5b de la bague 5. On note à ce stade de la description que le sommet 13d de chaque dent 13a, 13b, 13c est agencée en une pointe effilée.

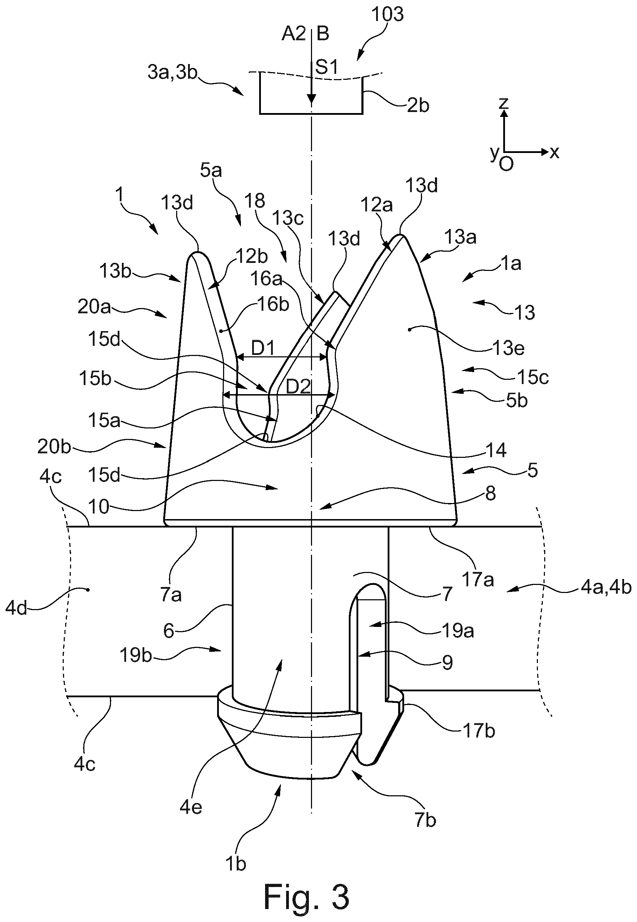

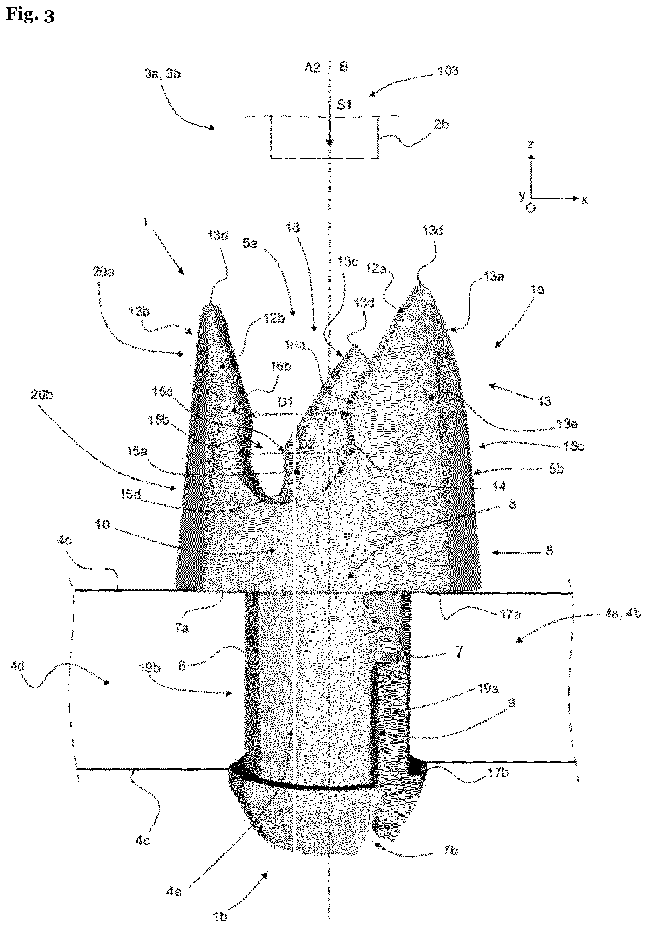

Chacune des dents 13a, 13b, 13c comporte deux rampes 12a, 12b de guidage qui s'étendent entre le sommet 13d et la base 13e de la dent 13a, 13b, 13c. Les rampes de guidage 12a, 12b de chacune des dents 13a, 13b, 13c sont sécantes au sommet 13d de chacune des dents 13a, 13b, 13c pour conférer aux dents 13a, 13b, 13c une conformation effilée et pointue mentionnée ci-dessus. Les dents 13a, 13b, 13c sont équiréparties autour de l'axe de révolution B de l'agrafe 1, tel qu'illustrée sur la figure 3.

Des gorges 15a, 15b, 15c sont ménagées dans une paroi 14 de la bague 5 en étant positionnées entre deux dents adjacentes 13a, 13b, 13c. Plus particulièrement, une première rampe de guidage 12a d'une première dent 13a est reliée par une première gorge 15a à une deuxième rampe de guidage 12b d'une deuxième dent 13b. Plus particulièrement encore, la première rampe de guidage 12a de la deuxième dent 13b est reliée par une deuxième gorge 15b à la deuxième rampe de guidage 12b d'une troisième dent 13b. Plus particulièrement enfin, la première rampe de guidage 12a de la troisième dent 13c est reliée par une troisième gorge 15c à la deuxième rampe de guidage 12b de la première dent 13a.

Chaque gorge 15 forme un espace de réception de la première branche 2a de l'embout 2 par emboitement axiale selon l'axe de révolution B d'une tranche radiale de la première branche 2a de l'embout 2 à l'intérieur de la bague 5. On note que chaque gorge 15a, 15b, 15c est agencée en un secteur circulaire majeur délimité par un pourtour périphérique circulaire 15d. On rappelle qu'un secteur circulaire majeur est le secteur circulaire de surface la plus grande parmi deux secteurs circulaires délimitées par deux rayons d'un cercle, l'autre des secteurs circulaires étant un secteur circulaire mineur.

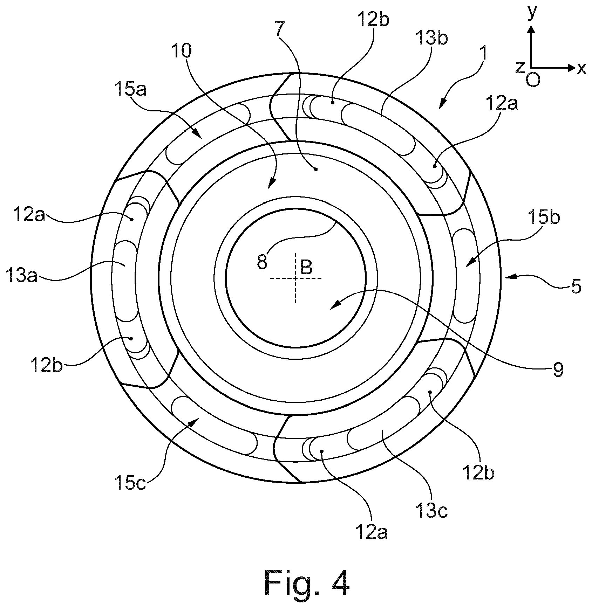

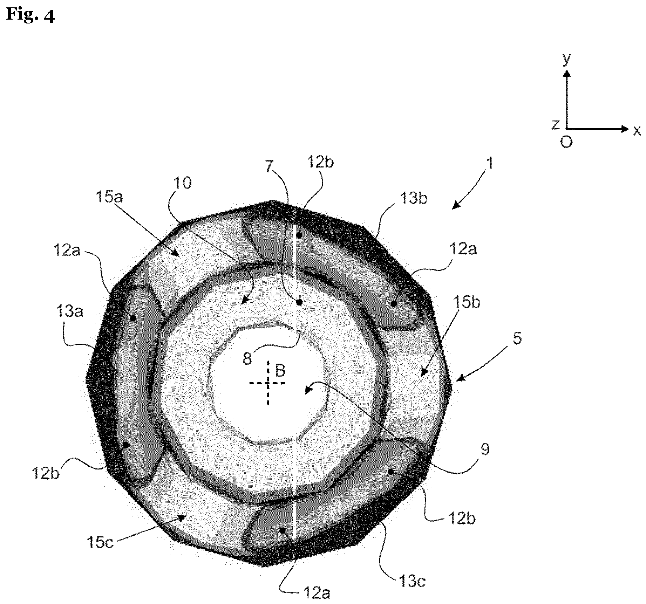

En se reportant également sur la figure 4, l"agrafe 1 comporte ainsi un moyen de guidage 20a de l'embout 2 associant les rampes de guidage 12a, 12b de la première branche 2a et l'évidement intérieur 9 recevant la deuxième branche 2b qui guident conjointement en translation la première branche 2a de l'embout 2 vers le moyen de verrouillage 20b de l'embout 2 sur l'agrafe 1, ce moyen de verrouillage 20b comprenant une pluralité de gorges 15a, 15b, 15c équipés de points de verrouillages 16a, 16 interdisant une échappée axiale de la première branche 2a hors de la gorge 15a, 15b, 15c.

Les points de verrouillage 16a, 16b sont interposés à chaque jonction d'une rampe de guidage 12a, 12b avec une gorge 15a, 15b, 15c. Chaque point de verrouillage 16a, 16b est formé d'un bossage qui constitue un point dur lors de l'introduction de la tranche radiale de la première branche 2a de l'embout 2 à l'intérieur de la gorge 15a, 15b, 15c. Le franchissement de ce point dur induit une déformation ou un pivotement des dents 13a, 13b, 13c. A cet effet, les dents 13a, 13b, 13c sont préférentiellement réalisées en une matière synthétique, notamment par moulage, comme préférentiellement l'entièreté de l'agrafe 1. Aussi, le pourtour périphérique circulaire 15d comporte deux extrémités constituées des deux points de verrouillage 16a, 16b ménagés en vis-à-vis l'un de l'autre et séparés d'une distance D1 qui est inférieure à un diamètre D2 de la gorge 15a, 15b, 15c.

On note que chaque gorge 15a, 15b, 15c débouche entre les points de verrouillage 16a, 16b vers un passage 18 qui est délimité par la première rampe de guidage 12a constitutive d'une dent 13a, 13b, 13c et la deuxième rampe de guidage 12b constitutive d'une dent 13a, 13b, 13c adjacente à la première dent 13a, 13b, 13c.

Par ailleurs, le fût 7 est agencé en un pion de fixation élastiquement déformable qui est configuré pour fixer l'agrafe 1 par emboîtement élastique sur l'organe de manœuvre 4a ou l'organe à manœuvrer 4b. A cet effet, le fût 7 comporte au moins deux échancrures 19a, 19b qui sont ménagées en vis-à-vis l'une de l'autre et qui s'ouvrent à une extrémité inférieure 7b du fût 7. A cet effet encore, la bague 5 comporte un premier épaulement 17a qui jouxte une extrémité supérieure 7a du fût 7 et le fût 7 comporte un deuxième épaulement 17b ménagé en vis-à-vis du premier épaulement 17a, le premier épaulement 17a et le deuxième épaulement 17b étant configurés en organe d'appui antagoniste le long de l'axe de révolution B contre des faces 4c d'une paroi 4d de l'organe de manœuvre 4a ou de l'organe à manœuvrer 4b.

La fixation de l'agrafe 1 sur l'organe de manœuvre 4a ou sur l'organe à manœuvrer 4b est par exemple réalisée en atelier par emboîtement élastique du fût 7 suivant l'axe de révolution B de l'agrafe 1, à l'intérieur d'un logement 4e que comporte l'organe de manœuvre 4a ou l'organe à manœuvrer 4b.

Ces dispositions sont telles que le moyen de guidage 20a ainsi constitué permet une mise en place de l'embout 2 sur l'agrafe 1 aisée et rapide lors d'une translation S1 de l'embout 2 vers l'agrafe 1, l'embout 2 ne rencontrant aucun méplat formant obstacle à une mise en place de l'embout sur l'agrafe, l'embout 2 ne rencontrant qu'un sommet effilé 13d des dents 13a, 13b, 13c, qui guide l'embout 2 directement vers un des passages 18, qui guide l'embout directement vers une des gorges 15a, 15b, 15c, dont les points de verrouillage 16a, 16b empêchent toute échappée de la première branche 2a de l'embout 2.

La présente invention atteint bien les objectifs fixés en proposant une agrafe qui facilite le montage à l'aveugle de l'organe de transmission toute en garantissant une liaison verrouillée entre cette organe de transmission et l'organe de manouvre ou l'organe à manœuvrer.

## Revendications

1. Agrafe (1) configurée pour la fixation d'un embout (2) équipant l'une quelconque au moins des extrémités (3a, 3b) d'un organe de transmission mécanique (4) reliant un organe de manœuvre (4a) et un organe à manœuvrer (4b) constitutifs d'un équipement (100) d'un véhicule automobile, l'agrafe (1) étant agencée pour maintenir l'embout (2) qui comporte un coude (2c) interposé entre une première branche (2a) de l'embout (2) et une deuxième branche (2b) de l'embout (2) qui s'étendent suivant des directions concourantes (A1, A2), l'agrafe (1) comportant une bague (5) qui est ménagée autour d'un axe de révolution (B) et qui est pourvue d'une pluralité de dents (13a, 13b, 13c) délimitant une pluralité de gorges (15a, 15b, 15c) constitutives d'un moyen de verrouillage (20b) agencé pour immobiliser la première branche (2a) de l'embout (2), et en ce que l'agrafe (1) comporte un fût (7) qui est ménagé autour de l'axe de révolution (B) et qui délimite un évidement intérieur (9) configuré pour loger la deuxième branche (2b) de l'embout (2), l'agrafe étant **caractérisée en ce que** la bague (5) comporte trois gorges (9) angulairement équiréparties autour de l'axe de révolution (B).

2. Agrafe (1) selon la revendication précédente, **caractérisée en ce que** chaque dent (13a, 13b, 13c) comporte au moins une rampe de guidage (12a, 12b) configurée pour guider la première portion (2a) de l'embout (2) vers le moyen de verrouillage (20b).

3. Agrafe (1) selon la revendication précédente, **caractérisée en ce que** chaque dent (13a, 13b, 13c) présente un profil effilé et s'étend entre un sommet (13d) de la dent (13a, 13b, 13c) et une base (13e) de la dent (5a, 5b, 5c), le sommet (13d) et la base (13e) de la dent (13a, 13b, 13c) étant reliés par deux rampes de guidage (12a, 12b).

4. Agrafe (1) selon l'une quelconque des revendications précédentes, **caractérisée en ce que** la gorge (15a, 15b, 15c) est agencée en un secteur circulaire majeur délimité par un pourtour périphérique circulaire (15d), le pourtour périphérique circulaire (15d) comportant deux extrémités formant deux points de verrouillage (16a, 16b) ménagés en vis-à-vis l'un de l'autre et séparés d'une distance (D1) inférieure à un diamètre (D2) du secteur circulaire majeur.

5. Agrafe (1) selon l'une quelconque des revendications 2 à 4, **caractérisée en ce que** la gorge (15a, 15b, 15c) débouche vers un passage (18) qui est délimité par une première rampe de guidage (12a) constitutive d'une première dent (13a, 13b, 13c) et une deuxième rampe de guidage (12b) constitutive d'une deuxième dent (13a, 13b, 13c) adjacente à la première dent (13a, 13b, 13c).

6. Agrafe (1) selon l'une quelconque des revendications précédentes, **caractérisée en ce que** le fût (7) est agencé en un pion de fixation élastiquement déformable qui est configuré pour fixer l'agrafe (1) par emboîtement élastique sur l'organe de manœuvre (4a) ou l'organe à manœuvrer (4b).

7. Agrafe (1) selon l'une quelconque des revendications précédentes, **caractérisée en ce que** le fût (7) comporte au moins deux échancrures (19a, 19b) qui sont ménagées en vis-à-vis l'une de l'autre et qui s'ouvrent à une extrémité inférieure (7b) du fût (7).

8. Agrafe (1) selon l'une quelconque des revendications précédentes, **caractérisée en ce que** la bague (5) comporte un premier épaulement (7d) qui jouxte la première extrémité (7e) du fût (7) et le fût (7) comporte un deuxième épaulement (7f) ménagé en vis-à-vis du premier épaulement (7d), le premier épaulement (7d) et le deuxième épaulement (7f) étant configurés en organe d'appui antagoniste le long de l'axe de révolution (B) contre des faces (4c) d'une paroi (4d) de l'organe de manœuvre (4a) ou de l'organe à manœuvrer (4b).

9. Agrafe (1) selon l'une quelconque des revendications précédentes, **caractérisée en ce que** le fût (7) et la bague (5) forment un ensemble monobloc.

10. Agrafe (1) selon l'une quelconque des revendications précédentes, **caractérisée en ce que** l'agrafe (1) est obtenue par moulage d'un matériau synthétique.

11. Dispositif de commande (101) d'un ouvrant d'un véhicule comprenant au moins un organe à manœuvrer (4b), un organe de manœuvre (4a) et au moins un organe de transmission mécanique (4) reliant l'organe de manœuvre (4a) et l'organe à manœuvrer (4b), l'organe de transmission mécanique (4) étant fixé à l'organe à manœuvrer (4b) et/ou à l'organe de manœuvre (4a) par une agrafe (1) selon l'une quelconque des revendications précédentes.

12. Dispositif de commande (101) selon la revendication précédente, **caractérisé en ce que** l'organe de transmission mécanique (4) comporte au moins une tringle interposée entre l'organe de manœuvre (4a) et l'organe à manœuvrer (4b).

13. Dispositif de commande (101) selon la revendication 11, **caractérisé en ce que** l'organe de transmission mécanique (4) comporte au moins un câble et une gaine interposés entre l'organe de manœuvre (4a) et l'organe à manœuvrer (4b).

14. Dispositif de commande (101) selon l'une quelconque des revendications 11 à 13, **caractérisé en ce qu'**au moins une extrémité de l'organe de transmission mécanique (4) comprend l'embout (2) qui comporte le coude (2c) interposé entre la première branche (2a) de l'embout (2) et la deuxième branche (2b) qui s'étendent suivant des directions concourantes (A1, A2), la première branche (2a) étant logée à l'intérieur du moyen de verrouillage (20b) et la deuxième branche (2b) étant logée à l'intérieur de l'évidement interne (9).

15. Ouvrant de véhicule automobile équipé d'un dispositif de commande (101) selon l'une quelconque des revendications 11 à 14, l'organe de manœuvre (4a) étant formé d'une poignée de manœuvre à l'ouverture de l'ouvrant et l'organe à manœuvrer (4b) étant formé d'une serrure de maintien de l'ouvrant en position de fermeture.

## Patentansprüche

1. Befestigungselement (1), das zur Befestigung eines Endstücks (2) konfiguriert ist, mit dem mindestens eines der Enden (3a, 3b) eines mechanischen Übertragungselements (4) ausgerüstet ist, das ein Betätigungselement (4a) und ein zu betätigendes Element (4b) verbindet, die Bestandteile einer Ausrüstung (100) eines Kraftfahrzeugs sind, wobei das Befestigungselement (1) dazu angeordnet ist, das Endstück (2) zu halten, welches einen Bogen (2c) umfasst, der zwischen einem ersten Arm (2a) des Endstücks (2) und einem zweiten Arm (2b) des Endstücks (2), die sich entlang sich schneidender Richtungen (A1, A2) erstrecken, eingefügt ist, wobei das Befestigungselement (1) einen Ring (5) umfasst, der um eine Drehachse (B) eingerichtet ist und über eine Vielzahl von Zähnen (13a, 13b, 13c) verfügt, die eine Vielzahl von Nuten (15a, 15b, 15c) begrenzen, die Bestandteile eines Verriegelungsmittels (20b) sind, das dazu angeordnet ist, den ersten Arm (2a) des Endstücks (2) zu immobilisieren, und dass das Befestigungselement (1) einen Schaft (7) umfasst, der um die Drehachse (B) eingerichtet ist und eine innere Aussparung (9) begrenzt, die dazu konfiguriert ist, den zweiten Arm (2b) des Endstücks (2) aufzunehmen, wobei das Befestigungselement **dadurch gekennzeichnet ist, dass** der Ring (5) drei Nuten (9) umfasst, die winklig gleichmäßig um die Drehachse (B) verteilt sind.

2. Befestigungselement (1) nach dem vorhergehenden Anspruch, **dadurch gekennzeichnet, dass** jeder Zahn (13a, 13b, 13c) mindestens eine Führungsrampe (12a, 12b) umfasst, die dazu konfiguriert ist, den ersten Abschnitt (2a) des Endstücks (2) zu dem Verriegelungsmittel (20b) zu führen.

3. Befestigungselement (1) nach dem vorhergehenden Anspruch, **dadurch gekennzeichnet, dass** jeder Zahn (13a, 13b, 13c) ein sich verjüngendes Profil aufweist und sich zwischen einer Spitze (13d) des Zahns (13a, 13b, 13c) und einer Basis (13e) des Zahns (5a, 5b, 5c) erstreckt, wobei die Spitze (13d) und die Basis (13e) des Zahns (13a, 13b, 13c) durch zwei Führungsrampen (12a, 12b) verbunden sind.

4. Befestigungselement (1) nach einem der vorhergehenden Ansprüche, **dadurch gekennzeichnet, dass** die Nut (15a, 15b, 15c) in einem größeren Kreissektor angeordnet ist, der durch einen kreisförmigen peripheren Umfang (15d) begrenzt wird, wobei der kreisförmige periphere Umfang (15d) zwei Enden umfasst, die zwei Verriegelungspunkte (16a, 16b) ausbilden, die einander gegenüberliegend eingerichtet sind und durch einen Abstand (D1) getrennt sind, der kleiner als ein Durchmesser (D2) des größeren Kreissektors ist.

5. Befestigungselement (1) nach einem der Ansprüche 2 bis 4, **dadurch gekennzeichnet, dass** die Nut (15a, 15b, 15c) zu einem Durchgang (18) hin mündet, der durch eine erste Führungsrampe (12a), die Bestandteil eines ersten Zahns (13a, 13b, 13c) ist, und eine zweite Führungsrampe (12b), die Bestandteil eines zweiten, zu dem ersten Zahn (13a, 13b, 13c) benachbarten Zahns (13a, 13b, 13c) ist, begrenzt wird.

6. Befestigungselement (1) nach einem der vorhergehenden Ansprüche, **dadurch gekennzeichnet, dass** der Schaft (7) als ein elastisch verformbarer Befestigungszapfen angeordnet ist, der dazu konfiguriert ist, das Befestigungselement (1) durch elastisches Einpassen an dem Betätigungselement (4a) oder dem zu betätigenden Element (4b) zu befestigen.

7. Befestigungselement (1) nach einem der vorhergehenden Ansprüche, **dadurch gekennzeichnet, dass** der Schaft (7) mindestens zwei Einschnitte (19a, 19b) umfasst, die einander gegenüberliegend eingerichtet sind und sich an einem unteren Ende (7b) des Schafts (7) öffnen.

8. Befestigungselement (1) nach einem der vorhergehenden Ansprüche, **dadurch gekennzeichnet, dass** der Ring (5) eine erste Schulter (7d) umfasst, die an das erste Ende (7e) des Schafts (7) angrenzt, und der Schaft (7) eine zweite Schulter (7f) umfasst, die gegenüber der ersten Schulter (7d) eingerichtet ist, wobei die erste Schulter (7d) und die zweite Schulter (7f) entlang der Drehachse (B) als einander entgegenwirkende Anlageelemente an Flächen (4c) einer Wand (4d) des Betätigungselements (4a) oder des zu betätigenden Elements (4b) konfiguriert sind.

9. Befestigungselement (1) nach einem der vorhergehenden Ansprüche, **dadurch gekennzeichnet, dass** der Schaft (7) und der Ring (5) eine einstückige Einheit bilden.

10. Befestigungselement (1) nach einem der vorhergehenden Ansprüche, **dadurch gekennzeichnet, dass** das Befestigungselement (1) durch Spritzgießen eines Kunststoffmaterials erhalten wird.

11. Vorrichtung zur Bedienung (101) eines Öffnungselements eines Fahrzeugs, die mindestens ein zu betätigendes Element (4b), ein Betätigungselement (4a) und mindestens ein mechanisches Übertragungselement (4), das das Betätigungselement (4a) und das zu betätigende Element (4b) verbindet, beinhaltet, wobei das mechanische Übertragungselement (4) durch ein Befestigungselement (1) nach einem der vorhergehenden Ansprüche an dem zu betätigenden Element (4b) und/oder dem Betätigungselement (4a) befestigt ist.

12. Bedienvorrichtung (101) nach dem vorhergehenden Anspruch, **dadurch gekennzeichnet, dass** das mechanische Übertragungselement (4) mindestens eine Stange umfasst, die zwischen dem Betätigungselement (4a) und dem zu betätigenden Element (4b) eingefügt ist.

13. Bedienvorrichtung (101) nach Anspruch 11, **dadurch gekennzeichnet, dass** das mechanische Übertragungselement (4) mindestens ein Seil und eine Umhüllung umfasst, die zwischen dem Betätigungselement (4a) und dem zu betätigenden Element (4b) eingefügt sind.

14. Bedienvorrichtung (101) nach einem der Ansprüche 11 bis 13, **dadurch gekennzeichnet, dass** mindestens ein Ende des mechanischen Übertragungselements (4) das Endstück (2) beinhaltet, welches den Bogen (2c) umfasst, der zwischen dem ersten Arm (2a) des Endstücks (2) und dem zweiten Arm (2b) des Endstücks eingefügt ist, die sich entlang sich schneidender Richtungen (A1, A2) erstrecken, wobei der erste Arm (2a) innerhalb des Verriegelungsmittels (20b) aufgenommen ist und der zweite Arm (2b) innerhalb der internen Aussparung (9) aufgenommen ist.

15. Öffnungselement eines Kraftfahrzeugs, das mit einer Bedienvorrichtung (101) nach einem der Ansprüche 11 bis 14 ausgerüstet ist, wobei das Betätigungselement (4a) aus einem Betätigungsgriff zum Öffnen des Öffnungselements gebildet ist und das zu betätigende Element (4b) aus einem Schloss zum Halten des Öffnungselements in der Schließstellung gebildet ist.

## Claims

1. Fastener (1) configured for fixing an endpiece (2) mounted on at least either one of the ends (3a, 3b) of a mechanical transmission member (4) connecting an operating member (4a) and a member that is to be operated (4b) that form part of an item of motor vehicle equipment (100), the fastener (1) being configured to hold the endpiece (2) which comprises a bend (2c) interposed between a first branch (2a) of the endpiece (2) and a second branch (2b) of the endpiece (2) which extend in concurrent directions (A1, A2), the fastener (1) comprising a ring (5) which is formed about an axis of revolution (B) and which is provided with a plurality of teeth (13a, 13b, 13c) delimiting a plurality of grooves (15a, 15b, 15c) that make up a locking means (20b) configured to immobilize the first branch (2a) of the endpiece (2), and in that the fastener (1) comprises a shank (7) which is formed around the axis of revolution (B) and which delimits an interior recess (9) configured to house the second branch (2b) of the endpiece (2), the fastener being **characterized in that** the ring (5) has three grooves (9) equally angularly distributed about the axis of revolution (B).

2. Fastener (1) according to the preceding claim, **characterized in that** each tooth (13a, 13b, 13c) comprises at least one guide ramp (12a, 12b) configured to guide the first portion (2a) of the endpiece (2) toward the locking means (20b).

3. Fastener (1) according to the preceding claim, **characterized in that** each tooth (13a, 13b, 13c) has a tapering profile and extends between a top (13d) of the tooth (13a, 13b, 13c) and a base (13e) of the tooth (5a, 5b, 5c), the top (13d) and the base (13e) of the tooth (13a, 13b, 13c) being connected by two guide ramps (12a, 12b) .

4. Fastener (1) according to any one of the preceding claims, **characterized in that** the groove (15a, 15b, 15c) is arranged as a major circular sector delimited by a circular peripheral perimeter (15d), the circular peripheral perimeter (15d) comprising two ends forming two locking points (16a, 16b) formed opposite one another and separated by a distance (D1) that is less than a diameter (D2) of the major circular sector.

5. Fastener (1) according to any one of Claims 2 to 4, **characterized in that** the groove (15a, 15b, 15c) opens onto a passage (18) which is delimited by a first guide ramp (12a) forming part of a first tooth (13a, 13b, 13c) and by a second guide ramp (12b) forming part of a second tooth (13a, 13b, 13c) adjacent to the first tooth (13a, 13b, 13c).

6. Fastener (1) according to any one of the preceding claims, **characterized in that** the shank (7) is configured as an elastically deformable fixing stake which is configured to fix the fastener (1) onto the operating member (4a) or onto the member that is to be operated (4b) by elastic push-fitting.

7. Fastener (1) according to any one of the preceding claims, **characterized in that** the shank (7) comprises at least two slots (19a, 19b) which are formed opposite one another and which open onto a lower end (7b) of the shank (7).

8. Fastener (1) according to any one of the preceding claims, **characterized in that** the ring (5) comprises a first shoulder (7d) adjoining the first end (7e) of the shank (7) and the shank (7) comprises a second shoulder (7f) formed facing the first shoulder (7d), the first shoulder (7d) and the second shoulder (7f) being configured as a member that presses in opposite directions along the axis of revolution (B) against faces (4c) of a wall (4d) of the operating member (4a) or of the member that is to be operated (4b).

9. Fastener (1) according to any one of the preceding claims, **characterized in that** the shank (7) and the ring (5) form a one-piece entity.

10. Fastener (1) according to any one of the preceding claims, **characterized in that** the fastener (1) is obtained by moulding a synthetic material.

11. Control device (101) for a vehicle opening leaf, comprising at least a member that is to be operated (4b), an operating member (4a) and at least one mechanical transmission member (4) connecting the operating member (4a) and the member that is to be operated (4b), the mechanical transmission member (4) being fixed to the member that is to be operated (4b) and/or to the operating member (4a) by a fastener (1) according to any one of the preceding claims.

12. Control device (101) according to the preceding claim, **characterized in that** the mechanical transmission member (4) comprises at least one linkage interposed between the operating member (4a) and the member that is to be operated (4b).

13. Control device (101) according to Claim 11, **characterized in that** the mechanical transmission member (4) comprises at least one sheathed cable interposed between the operating member (4a) and the member that is to be operated (4b).

14. Control device (101) according to any one of Claims 11 to 13, **characterized in that** at least one end of the mechanical transmission member (4) comprises the endpiece (2) which has the bend (2c) interposed between the first branch (2a) of the endpiece (2) and the second branch (2b) which extend in concurrent directions (A1, A2), the first branch (2a) being housed inside the locking means (20b) and the second branch (2b) being housed inside the internal recess (9).

15. Motor vehicle opening leaf equipped with a control device (101) according to any one of Claims 11 to 14, the operating member (4a) being formed of a handle for operating the opening of the opening leaf and the member that is to be operated (4b) being formed of a lock that holds the opening leaf in the closed position.
